(19) Europäisches Patentamt
European Patent Office
Office européen des brevets

(11) **EP 4 210 349 A1**

(12) **EUROPÄISCHE PATENTANMELDUNG**

(43) Veröffentlichungstag:
**12.07.2023 Patentblatt 2023/28**

(21) Anmeldenummer: **22150703.1**

(22) Anmeldetag: **10.01.2022**

(51) Internationale Patentklassifikation (IPC):
*H04R 3/00* [(2006.01)]  *H04B 7/08* [(2006.01)]
*G06F 3/16* [(2006.01)]  *H04W 4/06* [(2009.01)]
*H04R 27/00* [(2006.01)]

(52) Gemeinsame Patentklassifikation (CPC):
**H04R 3/00; G06F 3/165; H04B 7/0857; H04W 4/06;**
H04R 27/00; H04R 2420/01; H04R 2420/07

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Austrian Audio GmbH
1230 Wien (AT)**

(72) Erfinder: **Castiglione, Paolo
1040 Wien (AT)**

(74) Vertreter: **Patentanwälte
Barger, Piso & Partner
Operngasse 4
1010 Wien (AT)**

Bemerkungen:
Geänderte Patentansprüche gemäss Regel 137(2)
EPÜ.

(54) **VERFAHREN ZUR SIGNALVERARBEITUNG ZUSAMMENWIRKENDER MIKROFONRECEIVER**

(57) Die Erfindung betrifft ein Verfahren für den verteilten Empfang von Receivern, ohne die Leistungsanforderungen des Systems wesentlich zu erhöhen. Dies geschieht dadurch, dass das Verfahren in der Lage ist bei einem Receivernetzwerk mit geringer Komplexität, ohne zwingendem Zentralkoordinator durch eine laufende, receiverinterne, eigenständige Kombination der empfangenen Daten durch getrennte Antennen die Qualität der einzelnen Samples und damit des vom Netzwerk abgegebenen Signals stark zu verbessern, oder bei gleichbleibender Qualität der drahtlosen Übertragungsraten je Mikrofon, die räumliche Abdeckung pro Receiver zu erhöhen, sowie jedes zwischen diesen Extremen liegende Szenario zu verwirklichen.

Fig. 1

**Beschreibung**

Die Erfindung betrifft ein Verfahren zur Signalverarbeitung zusammenwirkender Mikrofonreceiver, entsprechend dem Oberbegriff des Anspruches 1.

Kabellose Mikrofone spielen in allen Bereichen, in denen Mikrofone eingesetzt werden eine immer größer werdende Rolle. Dabei treten immer multipath fading, Pfadverluste und Abschattungen (insbesondere durch Körperschatten) auf. Diese können die Funkreichweite besonders bei schmalbandigen drahtlosen Mikrofonübertragungen, die aufgrund Ihrer frequency agility besonders vorteilhaft sind, drastisch verringern. Um diese Probleme für kritische Anwendungen, bei denen jeder Audioausfall dramatische Folgen hat (z.B. große Konzerte), in den Griff zu bekommen, haben führende Hersteller professioneller Receiversysteme inzwischen die Zahl der Empfangsantennen von 2 auf 4 erhöht (siehe "Quad-Diversity": https://pubs.shure.com/guide/AD4Q/en-US.pdf; Abgerufen am 5. Oktober 2021). Jedoch können die Verringerung der Reichweite und die Performanceschwankungen der Fehlerrate der Receiver durch die Interferenzen verschärft werden, die mit spektral dichten Anwendungen einhergehen. Das kann so weit gehen, dass die Nutzer gezwungen sind, redundante Empfänger mit separaten Antennen aufzustellen, um den Empfangsbereich und die Signalstabilität des Mikrofons zu erhöhen. In solchen Fällen werden von den Nutzern mittels separater Antennen redundante Kopien desselben, von mehreren Receivern stammenden, Mikrofonsignals an ein Mischpult weitergeleitet (typischerweise über analoge XLR-Kabel oder über ein Audionetzwerk über Ethernet, z. B. Dante®). Die das Mischpult bedienende Person entscheidet dann auf Basis des Vergleichs der vom Receiver stammenden Daten zur Empfangsqualitäten, welches der unterschiedlichen Receiversignale letztlich weitergeleitet werden soll (z.B. an die Beschallungsanlage (PA) oder an das Broadcast-System). Dieses Prozedere hat folgende Nachteile:

- Die Umstellung auf einen zuverlässigeren Audiostrom wird manuell durchgeführt, wodurch dieser Vorgang anfällig für menschliche Fehler ist;
- schnell auftretende Aussetzer aufgrund einer Fading Notch, die zur Folge hat, dass die Qualität der Funkstrecke innerhalb weniger Millisekunden von "gut" zu "schlecht" wechselt, lassen sich nicht vermeiden, da die menschliche Reaktionszeit im Vergleich dazu viel zu lang ist;
- das Crossfading zwischen den Audiosignalen am Mischpult kann zu wahrnehmbaren Klangverzerrungen führen, die durch die Phasen- und Amplitudensprünge zwischen den Audiosignalkopien verursacht werden.

Es wurde daher im Stand der Technik versucht drahtlose Empfänger zusammenarbeiten zu lassen, um durch Austausch eines Teils der Daten die unterschiedliche räumliche Position der Antennen zur Verringerung der Fehlerraten zu nutzen.

Die theoretischen Grundlagen zur Maximierung der Netzwerkkapazität (im Sinne der Menge des Datenverkehrs, die ein Netz zu einem bestimmten Zeitpunkt bewältigen kann) sind etwa A. Wyner, "Shannon-theoretic approach to a Gaussian cellular multiple access channel," IEEE Trans. Inf. Theory, vol. 40, no. 6, pp. 1713-1727, Nov. 1994; oder S. V. Hanly and P. Whiting, "Information-theoretic capacity of multireceiver networks," Telecommun. Syst. - Modeling, Analysis, Design and Management, vol. 1, no. 1, pp. 1-42, 1993;oder O. Somekh and S. Shamai (Shitz), "Shannon-theoretic approach to a Gaussian cellular multiple-access channel with fading, " IEEE Trans. Inf. Theory, vol. 46, no. 4, p. 2000, July 2000.

Über die reine Informationstheorie hinaus gibt es im Bereich der Demodulation und Dekodierung zahlreiche Artikel und Patente, die sich mit der Optimierung verteilter Empfängertechniken befassen. Dabei steht das Verschalten mehrerer Empfänger mit separaten Antennen im Mittelpunkt, mit dem Ziel, die Empfangssicherheit zu verbessern. Als allgemeine Grundlagen der non-patent Litaeratur sind hier etwa D. Gesbert, S. Hanly, H. Huang, S. Shamai (Shitz), O.Simeone and W. Yu," Multi-Cell MIMO Cooperative Networks: A New Look at Interference," IEEE Journal on Selected Areas in Communications (Volume: 28, Issue: 9, December 2010) und H. Zhu, G. B. Giannakis, and A. Cano, "Distributed In-Network Channel Decoding," IEEE Trans. on Signal Processing, Vol. 57, no. 10, Oct. 2009 zu nennen.

Die veröffentlichte Literatur konzentriert sich entweder auf zellulare, lokale Netze mit hoher Rechenleistung, die leistungsstark aber energieaufwendig sind, wodurch sie komplexe Techniken und Algorithmen einsetzen können, um die Interferenzen innerhalb des drahtlosen Netzes zu beseitigen oder sogar auszunutzen; oder auf energieeffiziente drahtlose Netzwerke mit geringer Komplexität ohne besonders stenger Anforderungen an die maximal zulässige Latenz. Es wird also eine hohe Latenz akzeptiert, um die Kosten und Komplexität gering zu halten.

Die US 10,470,180 B2 beschreibt ein allgemeines drahtloses Mikrofonsystem mit einem oder mehreren "Ressourcenmanagern". Die zentrale Regelungsstelle weist den Mikrofonkanälen kontinuierlich Funkressourcen in Form von Timeslots oder Frequenzen zu und leitet die Hochfrequenzsignale an mehrere Empfänger weiter. Dabei ist die Anzahl der Antennen auf zwei festgelegt und es wird nicht gezeigt, wie weitere Empfangsantennen genutzt werden könnten. Es geht hier also um eine Netzwerkkoordination und nicht um die Verarbeitung der jeweiligen Signale aus unterschiedlichen Antennen.

Die US 8,670,380 B2 ist für die Erfindung als nächster Stand der Technik anzusehen. Darin wird offenbart wie mehrere Empfängermodule mit separaten Antennen dieselbe Audioquelle empfangen und die Daten an eine zusätzliche Koordinationseinheit der Empfängermodule weiterleiten. Diese Koordinationseinheit kann die qualitativ besten Audiodaten auswählen und diese an einen Audiooutput (z.B. PA) weiterleiten. Die Anmeldung nutzt das Zeitmultiplexverfahrens (TDMA) für die Signalübertragung. Das Herzstück der Anmeldung ist das Signalsynchronisationsschema, das zwischen den Empfängern abgestimmt wird und durch das TDMA ermöglicht wird. Problematisch daran ist, dass einerseits zwingend eine Koordinationseinheit benötigt wird, und noch wichtiger, dass in der Praxis für viele professionelle Anwendungen nur das Frequenzmultiplexverfahren (FDMA) die Systemanforderungen erfüllen kann, da de facto nur das FDMA weltweit die EMV Standards (etwa der FCC) für das UHF-Band ab 470 MHz erfüllt.

Beispiele für Anforderungen, die sich nur durch das FDMA erfüllen lassen sind, neben rechtlichen Rahmenbedingungen wie etwa der FCC, lange Batterielebensdauer an tragbaren Sendern, geringe Interferenzen mit Nachbarkanälen, ein geringer spectral footprint, geringe Komplexität der Hardwaredesigns da keine Transceiver erforderlich sind, geringe Latenz, u.v.m. Die gegenüber TDMA bessere Eignung von FDMA wird anschaulich durch die Tatsache belegt, dass alle professionellen drahtlosen Mikrofonsysteme FDMA verwenden. Da etwa das Bestehen einer EMV-Prüfung für Receiver verpflichtend ist und sie sonst nicht verkauft werden dürften, ist das in US 8,670,380 B2 vorgeschlagene TDMA-basierte Verfahren in realen professionellen Systemen für das UHF-Band ab 470 MHz bis 608 MHz nach dem Stand der Technik nicht anwendbar.

Keine der veröffentlichten Erfindungen befasst sich mit dem verteilten Empfang einer Schmalbandübertragung durch ein Receivernetz mit geringer Komplexität und der für ein professionelles drahtloses Mikrofonsystem typischen Anforderungen eines Systems mit FDMA-Übertragung und einer extrem kurzen Latenzzeit (die zulässige Obergrenze der Latenzzeit vom analogen Audioeingang eines Mikrofonsenders zum analogen Audioausgang des Empfängers liegt für professionelle Musikanwendungen zum Zeitpunkt der Erfindung bei unter 2 ms). Mit anderen Worten, alle verfügbare Literatur und Patente über den verteilten Empfang und Dekodierung erfüllen nicht die Anforderungen, die an typische professionelle drahtlose Mikrofonanwendungen gestellt werden.

Es besteht somit ein Bedarf an einem Verfahren für den verteilten Empfang einer Schmalbandübertragung durch ein Receivernetzwerk, das keinen Zentralkoordinator benötigt, mit geringer Komplexität auskommt und das die für ein professionelles drahtloses Mikrofonsystem typischen Anforderungen eines Systems mit FDMA-Übertragung sowie extrem kurzen Latenzzeiten erfüllt.

Es ist Ziel und Aufgabe der Erfindung, einen solches Verfahren für den verteilten Empfang zur Verfügung zu stellen, ohne dadurch die Leistungsanforderungen des Systems wesentlich zu erhöhen.

Erfindungsgemäß wird dieses Ziel durch die im kennzeichnenden Teil des Anspruches 1 angegebenen Merkmale erreicht. Mit anderen Worten wird ein Verfahren offenbart, das in der Lage ist bei einem Receivernetzwerk mit geringer Komplexität, ohne zwingendem Zentralkoordinator durch eine laufende, receiverinterne, eigenständige Kombination der empfangenen Daten durch getrennte Antennen die Qualität der einzelnen Samples und damit des vom Netzwerk abgegebenen Signals stark zu verbessern, oder bei gleichbleibender Qualität der drahtlosen Übertragungsraten je Mikrofon, die räumliche Abdeckung pro Receiver zu erhöhen, sowie jedes zwischen diesen Extremen liegende Szenario zu verwirklichen.

Die Erfindung wird im Folgenden anhand der Zeichnung näher erläutert. Dabei zeigt

die Fig. 1 einen beispielhaften Aufbau eines Netzwerks mit Daisy-Chain-Topologie, das das erfindungsgemäße Verfahren nutzen kann,

die Fig. 2 einen beispielhaften Aufbau eines Netzwerks in Sterntopologie, das das erfindungsgemäße Verfahren nutzen kann,

die Fig. 3 einen beispielhaften Verfahrensablauf für eine Receiversignalverarbeitung eines Receivers aus dem Stand der Technik,

die Fig. 4 eine schematische Darstellung des erfindungsgemäßen Verfahrens für ein Netzwerk mit Daisy-Chain-Topologie gemäß Fig. 1,

die Fig. 5 eine schematische Darstellung des erfindungsgemäßen Verfahrens für ein Netzwerk mit Sterntopologie gemäß Fig. 2,

die Fig. 6 einen möglichen Ablauf des erfindungsgemäßen Verfahrens für ein Daisy-Chain Netzwerk gemäß Fig. 1 und Fig. 4,

die Fig. 7 einen möglichen Ablauf des erfindungsgemäßen Verfahrens für ein Stern-Netzwerk gemäß Fig. 2 und Fig. 5.

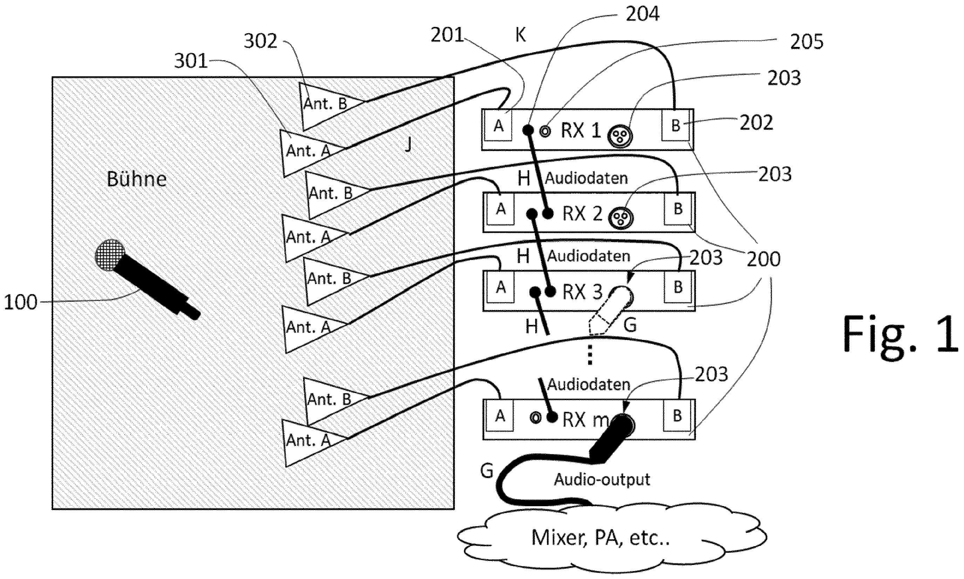

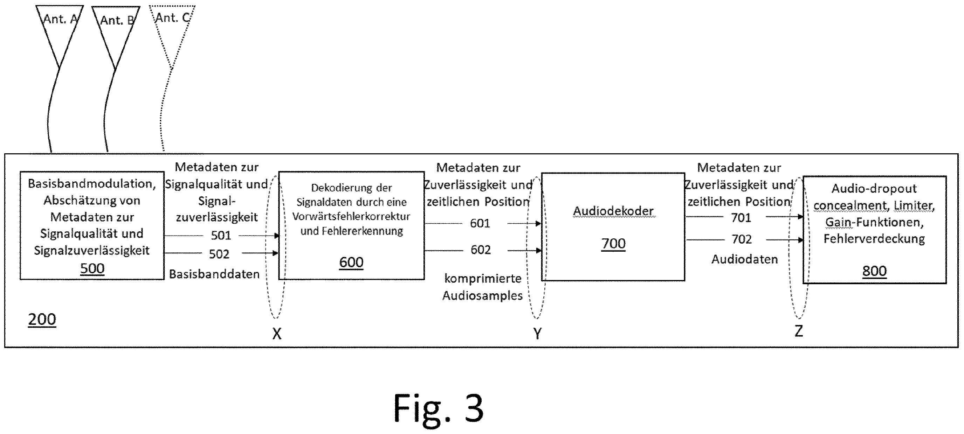

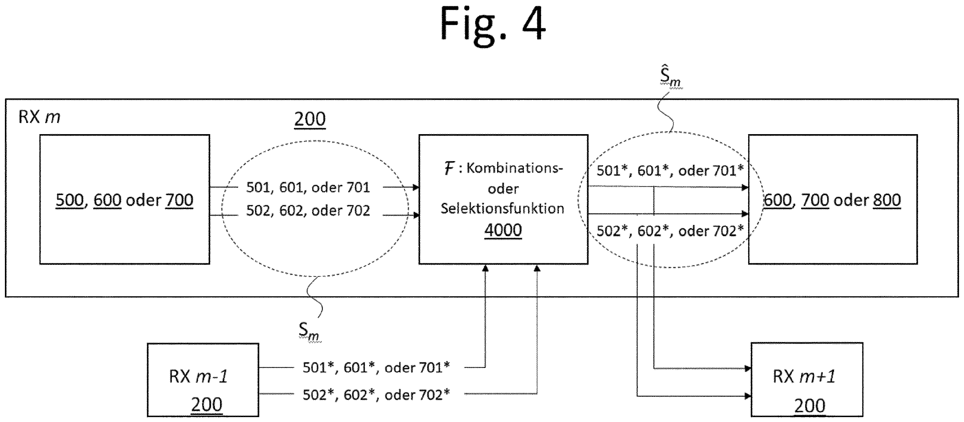

Die Fig. 1 zeigt einen beispielhaften Aufbau eines Netzwerks, das das erfindungsgemäße Verfahren nutzen kann, enthaltend ein drahtloses Mikrofon 100 als Sender, mehrere Receiver 200 mit Eingangsports 201, 202 sowie je einer Output-Schnittstelle 203, je einem Datenausgang 204, je einem Dateneingang 205, je zumindest einer, in diesem Beispiel je zwei Antennen 301, 302 pro Receiver, einer Audio-Output-Verkabelung G, Kabeln H und den Koaxialkabeln J, K, die je eine Antenne 301, 302 mit dem Receiver 200 verbinden. Das drahtlose Mikrofon 100 sendet im dargestellten Beispiel kodierte und modulierte Audiodaten über eine voreingestellte Trägerfrequenz an die Antennen 301, 302. Der Frequenzkanal des Mikrofons 100 ist dabei immer mit den zugehörigen Receivern 200 synchronisiert, daher empfangen alle Receiver 200 durch die Antennen 301, 302 die gleichen Daten des Mikrofons 100. Zur Signalübertragung wird im dargestellten Beispiel beim erfindungsgemäßen Verfahren typischerweise das Frequenzmultiplexverfahren (FDMA) verwendet, es ist jedoch kein Muss. So ist theoretisch auch die Verwendung des CDMA, des TDMA oder des OFDMA möglich, wobei jedoch bei TDMA oder OFDMA wieder ein Zentralkoordinator benötigt würde. Von den Antennen 301, 302 aus wird das empfangene Hochfrequenzsignal über die Koaxialkabel J, K an die Eingangsports 201, 202 der Receiver 200 weitergeleitet. Im dargestellten Beispiel sind die Receiver 200 über die Kabel H verbunden, um ein Daisy-Chain-Netzwerk mit linearer Topologie zu bilden. Die für H verwendete Hardware kann jede geeignete Kabeltechnologie sein (Draht, Koaxial- oder Glasfaserkabel). Das direkte, unidirektionale Protokoll zur seriellen Datenübertragung vom Ausgang 204 zum Eingang 205 zwischen den Receivern 200 kann ad-hoc definiert, oder unter allen bekannten und für die jeweilige Anwendung geeigneten digitalen Audio-Network-Technologien mit geringer Latenz ausgewählt werden. Weiters ist es möglich, dass das Protokoll zur Datenübertragung ein geeignetes Audio-over-Ethernet-Protokoll mit niedriger Latenz (z.B. Dante®) ist. Das Signal, das von einem Receiver 200 zum nächsten weitergeleitet wird, enthält die bis zu diesem Zeitpunkt im Netzwerk zusammengefügten Audiodaten sowie die dazugehörigen Metadaten (siehe Fig. 3). Datenausgang 204 und Dateneingang 205 können auch bidirektionale physikalische Input/Output Ports sein, wie im Fall eines typischen digitalen Netzwerks. Die Reihenfolge der Receiver kann bei einem digitalen Datennetzwerkphysisch oder per Software festgelegt werden. Im dargestellten Beispiel sind unidirektionale Ports für eine direkte serielle Übertragung zwischen zwei Receiver abgebildet, da es sich um ein low-complexity-Beispiel handelt. Jeder Receiver 200 wandelt die Audiodaten in das geeignete Format um (Digital-Analog-Wandlung, Audio-over-Ethernet, z.B. Dante®, ect.) und leitet sie durch die Output-Schnittstelle 203 über eine geeignete Output-Verkabelung G (z.B. XLR, Ethernet, ect.) an das nächste Verarbeitungsglied (typischerweise ein Tonmischpult, ein PA-System, ein Aufnahmesystem, ect.) weiter. Die Anwendung des Verfahrens ist nicht auf Receiver mit zwei Antennen beschränkt. Grundsätzlich sind Anordnungen mit n-vielen Antennen je Receiver denkbar, wobei $n \geq 1$ ist. Theoretisch wäre auch ein Receivernetzwerk möglich, dessen Receiver ungleich viele Antennen aufweisen, so lange die Kompatibilität der Receiver untereinander gewährleistet bleibt. Für Details zum erfindungsgemäßen Verfahrensablauf für ein Netzwerk mit Daisy-Chain-Topologie siehe Fig. 4.

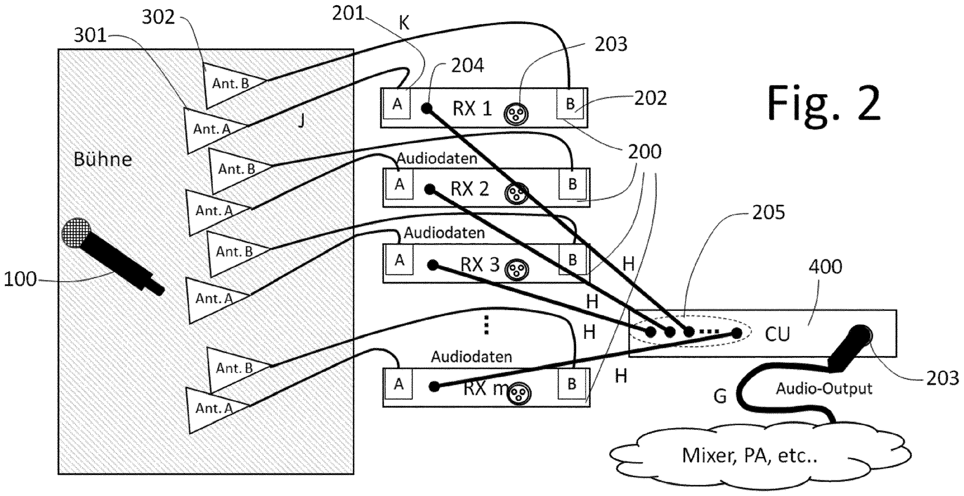

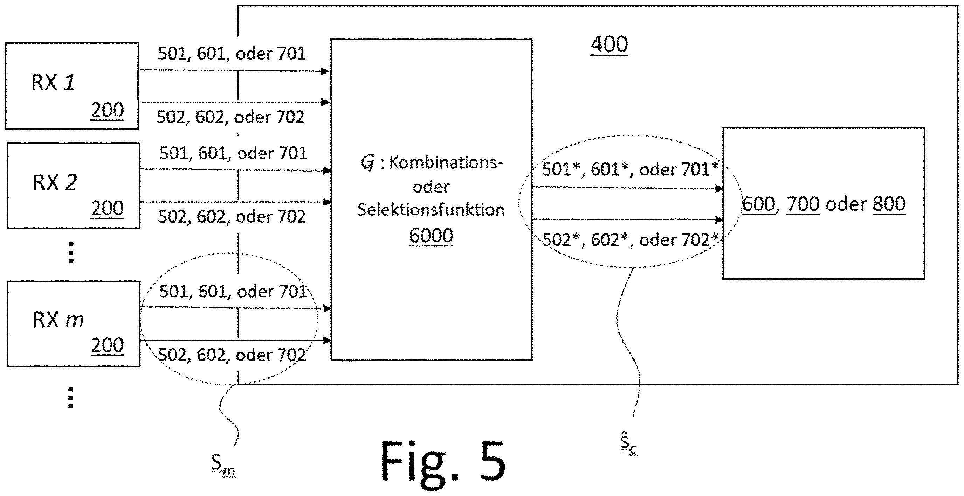

Fig. 2 zeigt einen zu Fig. 1 alternativen beispielhaften Aufbau eines Netzwerks, das das erfindungsgemäße Verfahren nutzen kann, enthaltend ein drahtloses Mikrofon 100 als Sender, mehrere Receiver 200 mit HF-Eingangsports 201, 202, je einer Output-Schnittstelle 203, je einem Datenausgang 204, je zumindest einer, in diesem Beispiel je zwei Antennen 301, 302 pro Receiver, Verbindungskabeln H, den Koaxialkabeln J, K, die je eine Antenne 301, 302 mit dem Receiver 200 verbinden, einer Zentraleinheit 400 mit einer Output-Schnittstelle 203, einem multiplen Dateneingang 205 und einer Audio-Output-Verkabelung G. Das Dateneingang 205 kann im Fall eines Ethernet-Netzwerks als einzelner, mit einem externen LAN Switch verbundener, Port implementiert werden, wenn die multiplen Inputs aus den M Receivern zu einem Switch des gleichen LAN Netzwerks zusammengeführt werden. Die Datenverarbeitung innerhalb eines Receivers 200 kann bei der Sterntopologie analog zur Daisy-Chain-Topologie erfolgen. Der große Unterschied liegt hier darin, dass die verarbeiteten Daten an die Zentraleinheit 400 übermittelt werden. Dieser Umstand kann in manchen Szenarien (etwa bei der Verwendung von TDMA) vorteilhaft sein. Bei der Zentraleinheit 400 kann es sich entweder um eine dezidierte Verarbeitungseinheit handeln, wie sie aus dem Stand der Technik bekannt sind, deren Aufgabe nur die Verarbeitung der eingehenden Daten ist, oder es kann sich bei ihr ebenfalls um einen Receiver handeln, der die Aufgaben der Datenverarbeitung nur zusätzlich übernimmt. Im zweiten Fall muss der Receiver sowohl über einen Datenausgang 204 als auch einen Dateneingang 205 verfügen. Die Anwendung des Verfahrens ist nicht auf Receiver mit zwei Antennen beschränkt. Grundsätzlich sind Anordnungen mit n-vielen Antennen je Receiver denkbar, wobei $n \geq 1$ ist. Theoretisch wäre auch ein Receivernetzwerk möglich, dessen Receiver ungleich viele Antennen aufweisen, so lange die Kompatibilität der Receiver untereinander gewährleistet bleibt. Für Details zum erfindungsgemäßen Verfahrensablauf für ein Netzwerk mit Sterntopologie siehe Fig. 5.

Fig. 3 zeigt beispielhaft einen, in Signalflussstruktur mit Verarbeitungsblöcken dargestellten, Verfahrensablauf für einen Receiver 200 aus dem Stand der Technik, bestehend aus einem Datenerfassungsblock 500, Metadaten zu Timing und Signalqualität 501, die gemeinsam mit Basisbanddaten (etwa PSK modulierte Symbols oder LLRs) 502 an eine Schnittstelle X weitergeleitet werden, einem FEC/Kanaldekodierungsblock 600, Metadaten zu Timing und Signalzuverlässigkeit 601, die gemeinsam mit komprimierten Audiodateien 602 an eine Schnittstelle Y weitergeleitet werden, einem Audiodekoderblock 700, Metadaten zu Timing und Signalzuverlässigkeit 701, die gemeinsam mit Audiodateien 702 an eine Schnittstelle Z weitergeleitet werden und einem Endverarbeitungsblock 800. Im Signalerfassungsblock 500 werden aus den über die Antennen 301, 302 empfangenen Signalen, basisbandmodulierte digitale Symbols, parallel zu Ihren Information zu Timing und Zuverlässigkeit, als Input für die Kanal Dekodierungsverfahren (z.B. Viterbi) generiert. Als Algorithmen kommen etwa frame synchronization, symbol timing synchronization, frequency/phase offset synchronization s o.ä. in Frage. Anschließend erfolgt in Block 500 die Ermittlung der Basisbandsignale und eine Abschätzung der Signalqualität des Basisbandsignals durch den Receiver 200, etwa in Hinblick auf den Pegel, das Rauschverhalten (Signal-Noise-Ratio, SNR), oder durch eine Berechnung der Likelihood Metrik. Die Basisbanddaten 502 werden gemeinsam mit den Metadaten zu Timing und Signalqualität 501 an die Empfangsschnittstelle X des Blocks zur FEC Kanaldekodierung 600 weitergeleitet. Im Dekodierungsblocks 600 erfolgt eine Dekodierung der Signaldaten durch eine Vorwärtsfehlerkorrektur (Forward Error Correction, FEC) etwa mittels Viterbi Decoder, Viterbi Demodulator oder MAP (Maximum a posteriori probability) Decoder und eine Fehlererkennung (z.B. mittels zyklischer Redundanzprüfung, CRC). Die in weiterer Folge vom Dekodierungsblock 600 an den Audiodekoderblock 700 übertragenen Daten beinhalten neben den komprimierten Audiosamples 602, zur Synchronisierung der Daten auch Metadaten 601 zur Zuverlässigkeit und zeitlichen Position der Audiodaten im Frame des Wireless Physical Layer (PHY) Protocols. Die Daten 601, 602 stehen dann an der Schnittstelle Y der Verarbeitungskette des Receivers 200 zur Verfügung. Im Audiodekoderblock 700 wird eine Dekompression der Audiodaten durchgeführt. Anschließend werden die Audiodaten 702 parallel zu den Metadaten 601 zur Zuverlässigkeit und zeitlichen Position der Audiodaten an den Endverarbeitungsblock 800 mit der Eingangsschnittstelle Z weitergeleitet. Im Endverarbeitungsblock 800 kann dann eine weitere Bearbeitung des Signals durch Equalizer Filter, Limiter, Gain-Funktionen, Fehlerverdeckung (Dropout-Concealment), oder Ähnliches erfolgen. Schlussendlich erfolgt eine Weiterleitung des endverarbeiteten Signals an die Output-Schnittstelle 203. Die Daten können nun in den unterschiedlichen Verarbeitungszuständen abgegriffen werden. Typisch ist eine Datengewinnung an der Schnittstelle Y. Alternative Ausführungsformen sehen jedoch vor, dass die Daten früher oder später aus der Verarbeitungskette, also an den Schnittstellen X (i.e. die Daten 502) oder Z (i.e. die Daten 702), d.h. entweder vor dem FEC-Kanaldecoder 600 oder nach dem Audiodecoder 700, extrahiert werden. Ein Vorteil der Verwendung des aus Y extrahierten, komprimierten Audiosignals 602 besteht darin, dass die durch den Audiodekoder 700 entstehende error propagation, im Gegensatz zur Verwendung der unkomprimierten Daten 702 und deren Metadaten zu zeitlicher Position und Signalzuverlässigkeit 701 von der Schnittstelle Z, nicht vorhanden sind. Andererseits kann durch Weiterleitung der an der Schnittstelle X extrahierten Daten 502 und ihrer Metadaten 501 (sogenannter "soft input" des FEC-Kanaldecoder 600) an den nächsten Receiver 200, der sogenannte "coding gain" durch den Kanaldecoder 600 deutlich verbessert werden, sofern die von mehreren Antennen empfangenen Daten richtig kombiniert werden (vgl. P. Isomäki und J. Isoaho, "On Diversity Combining", TUCS Technical Report, April 2008). Der Nachteil der Weiterleitung von Daten der Schnittstelle X im Vergleich zur Weiterleitung von Daten der Schnittstelle Y besteht darin, dass die Eingangsdatenrate für die digitale Audioverbindung deutlich ansteigen kann. Das gilt selbst für den Fall, dass effiziente Komprimierungstechniken, wie z. B. die Berechnung von LLRs mit effizienten Quantisierungsraten, verwendet werden. Je niedriger die Input-Raten sind, desto geringer kann die Verzögerung im Protokoll des digitalen Audionetzes durch Pufferung sein, wodurch die Gesamtlatenz sinkt. Darüber hinaus kann die optimale Kombination von Soft-Inputs mehrerer Antennen über das gesamte Receivernetz hinweg zu einer Angelegenheit von äußerst hohem Rechenaufwand werden. Diese Umstände führen zu den im Stand der Technik beschriebenen Problemen wie komplexen Systemen und hoher erforderlicher Rechenleistung.

Fig. 4 zeigt eine schematische Darstellung des in Signalflussstruktur mit Verarbeitungsblöcken dargestellten erfindungsgemäßen Verfahrens für ein Daisy-Chain-Netzwerk gemäß Fig. 1. Es umfasst die Receiver 200, die Kombination der paarweisen Daten 501 und 502, 601 und 602, oder 701 und 702 des Daisy-Chain-Netzwerk der Receiver 200 in einem Funktionsblock 4000 mittels einer generischen Funktion $\mathcal{F}$. Zur besseren Orientierung innerhalb der Figur werden die drei dargestellten Empfänger 200 hier mit RX $m$ - 1, RX $m$ und RX $m$ + 1 gekennzeichnet. Es werden wie aus dem Stand der Technik bekannt die im Signalerfassungsblock 500 aus den über die $n \geq 1$ Antennen 301, 302 empfangenen Signale, basisbandmodulierte digitale Symbols, parallel zu Ihren Information zu Timing und Zuverlässigkeit, als Input für die Kanal Dekodierungsverfahren (z.B. Viterbi) generiert. Als Algorithmen kommen auch hier etwa frame synchronization, symbol timing synchronization, frequency/phase offset synchronizations o.ä. in Frage. Anschließend erfolgt in Block 500 die Ermittlung der Basisbandsignale und eine Abschätzung der Signalqualität des Basisbandsignals durch den Receiver 200, etwa in Hinblick auf den Pegel, das Rauschverhalten (Signal-Noise-Ratio, SNR), oder durch eine Berechnung der Likelihood Metrik. Die im gewünschten Verarbeitungszustand bei X extrahierten lokalen Daten 502, bei Y extrahierten lokalen Daten 602 oder bei Z extrahierten lokalen Daten 702 werden zusammen mit den zugehörigen Metadaten 501, 601 bzw. 701 an den Funktionsblock 4000 übermittelt, in dem die Kombinations- oder Selektionsfunktion $\mathcal{F}$ durchgeführt wird. Für das Ablaufschema zur Gewinnung der lokalen Daten 502, 602 oder 702 sowie deren zugehöriger Metadaten 501, 601 oder 701 wird auf Fig. 3 verwiesen. Nach der Durchführung der Funktion $\mathcal{F}$ werden die entsprechend adaptierten, von den Eingangsdaten abhängigen Datensätze 502*/501*, 602*/601* oder 702*/701* sowohl an den nächsten receiverinternen Verarbeitungsblock 600, 700 oder 800 zum lokalen Aufbau des Audioausgangssignals weitergeleitet, als auch an den nächsten ($m$ + 1-ten) Receiver im in Fig. 1 dargestellten Netzwerk. Die Kombination der Daten am $m$-ten Receiver erfolgt sowohl auf der Grundlage der lokal erzeugten Daten als auch, sofern verfügbar, auf der Grundlage der vom vorherigen $m$ - 1-ten Receiver stammenden Daten (am ersten Receiver der Daisy-Chain existiert klarerweise kein $m$ - 1-ter Receiver). Der Audio-Output kann auf der Basis der lokal verfügbaren Daten (zumindest eines Receivers) an jedem beliebigen Knoten des Netzes unabhängig von der Netzkonfiguration erzeugt werden. Es ist damit sofort ersichtlich, dass das Signal einer immer weiter steigenden Verbesserung unterliegt, je mehr Receiver in einem Netzwerk zusammengeschalten sind, die Daten zur Verfügung stellen und verarbeiten können.

Die an den nächsten receiverinternen Verarbeitungsblock 600, 700 oder 800, je nach Anwendungsfall, weitergeleiteten Daten werden bis zum Endverarbeitungsblock 800 verarbeitet und anschließend zu einem Outputspeicher weitergeleitet. Dort werden die Daten temporär gespeichert und nach einer bestimmten Zeit gelöscht. Außerdem werden die verarbeiteten Daten über ein am Audio-Output 203 angeschlossenes Kabel G übertragen werden, sofern ein Kabel G angeschlossen ist. Es kann dadurch eine Redundanz für den Fall erreicht werden, dass es zum Ausfall eines Receivers in der Kette kommt.

Fig. 5 zeigt eine schematische Darstellung des in Signalflussstruktur mit Verarbeitungsblöcken dargestellten erfindungsgemäßen Verfahrens für ein Stern-Netzwerk gemäß Fig. 2. Es umfasst die Weiterleitung der Daten 501, 502, 601, 602, 701, 702 eines einzelnen Receivers 200 an eine Zentraleinheit 400 und Kombination der Daten in einem Funktionsblock 6000 mittels einer generischen Funktion $\mathcal{G}$. Zur besseren Orientierung innerhalb der Figur werden die Empfänger 200 aus mit RX 1 bis RX $m$ gekennzeichnet.

Die im gewünschten Verarbeitungszustand bei X extrahierten lokalen Daten 502, bei Y extrahierten lokalen Daten 602 oder bei Z extrahierten lokalen Daten 702 werden zusammen mit den zugehörigen Metadaten 501, 601 bzw. 701 an die Zentraleinheit 400 übermittelt und dort an den Funktionsblock 6000, in dem die Kombinations- oder Selektionsfunktion $\mathcal{G}$ durchgeführt wird. Für das Ablaufschema zur Gewinnung der lokalen Daten 502, 602 oder 702 sowie deren zugehöriger Metadaten 501, 601 oder 701 wird auf Fig. 3 verwiesen. Nach der Durchführung der Funktion $\mathcal{G}$ werden die entsprechend adaptierten Daten 502*/501*, 602*/601* oder 702*/701* an den nächsten Verarbeitungsblock 600, 700 oder 800 innerhalb der Zentraleinheit 400 zum lokalen Aufbau des Audioausgangssignals weitergeleitet. Der Audio-Output erfolgt dann nach der Endverarbeitung der Daten im Zentralpunkt 400.

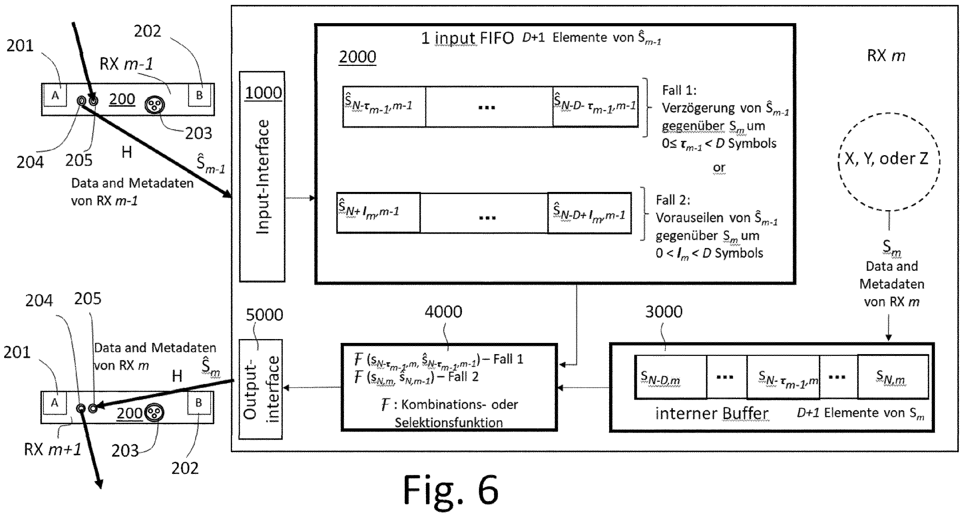

Die Fig. 6 zeigt einen möglichen Ablauf des erfindungsgemäßen Verfahrens für ein Daisy-Chain Netzwerk gemäß Fig. 1 und Fig. 4, mit mehreren durch die Kabel H miteinander verbundenen Receivern RX $m$ - 1, RX $m$ und RX m + 1 in Daisy-Chain Anordnung, einem Input-Interface 1000, einem Input-Buffer 2000, einem internen Buffer 3000, einem Funktionsblock 4000 und einem Output-Interface 5000. Eine Aufgabe der Erfindung ist, dass eine möglichst geringe Latenz angestrebt wird. Aufgrund der Tatsache, dass jeder Receiver für sich selbst arbeitet und der damit verbundenen Art der digitalen Datenverarbeitung eines asynchronen Receivers, ist die Verarbeitung derselben Daten von einem Receiver, gegenüber einem anderen Receiver der Kette, um eine Zeitspanne $\tau_p \geq 0$ verzögert. $\tau_p$ ist damit die Latenz zwischen dem schnellsten und dem langsamsten Receiver der bis zu dem gerade betrachteten Receiver reichenden Receiverkette. Da die Latenz weder $\tau_p = 0$ werden kann, noch beiliege Höhen an, ist sie physikalisch begrenzt. In Anwendungen, bei denen eine geringe Latenz gefordert wird, ist die geforderte Obergrenze für $\tau_p$ im Vergleich zur Gesamtlatenz sehr niedrig. Im dargestellten Fall liefern nur das Input-Interface 1000 und das Output-Interface 5000 einen nennenswerten Beitrag zur Gesamtlatenz des digitalen Protokolls. Die Verzögerung aufgrund der intrinsischen physikalischen Wellenausbreitung über das Kabel H ist vernachlässigbar. Die gemeinsame Latenz von Input-Interface 1000 und Output-Interface 5000 kann zur Interface-Latenz $\tau_i$ des Receivers zusammengefasst werden. Sie kann etwa wenige $\mu s$ betragen wenn ein einzelner Stream komprimierter Audiodateien mit einer Abtastrate von 48kHz direkt seriell mittels Point-to-Point Protocol und einer Übertragungsrate von mehreren Megabyte pro Sekunde (Mbps) übertragen wird. Die Gesamtlatenzzeit des Netzwerks am Output-Interface 5000 des m-ten Receivers ist damit definiert durch

$$\tau_m = \tau_p + (m-1) * \tau_i \qquad (1)$$

Wobei der Term $(m - 1) * \tau_i$ die Gesamtlatenz des Netzwerks vor dem $m$-ten Receiver darstellt und $\tau_p$, wie bereits beschrieben, die Verarbeitungsverzögerungen im Netzwerk. Zu einem gegebenen Zeitpunkt N sind an einer der Schnittstellen X, Y oder Z des m-ten Receivers die aktuellen Daten $S_m$ verfügbar. Im Falle der Schnittstelle Y ist das beispielsweise ein Paket von Bits, das das neueste komprimierte Audiosample, seine Position in der übertragenen Framing-Structure und Qualitätsmetadaten (Timing- und Reliability-Metadaten 601 in Fig. 4) des Samples enthält. Die Daten $S_m$ werden zum Zeitpunkt $N$ im internen Buffer 3000 gebuffert, i.e., $\{s_{N-D,m}, \ldots, s_{N,m}\}$, und anschließend an den Funktionsblock 4000 übergeben. Die Daten $S_m$ entsprechen dabei den Datenpaaren 501/502, 601/602, oder 701/702 aus Fig. 4. Weiters erhält der m-te Receiver die Daten und Metadaten $\hat{S}_{m-1}$ von dem ihm im Netzwerk vorgelagerten $(m - 1)$-ten Receiver. Diese entsprechen den Datenpaaren 501*/502*, 601*/602*, oder 701*/702* des $(m - 1)$-ten Receivers aus Fig. 4 und werden am Input-Interface 1000 vom m-ten Receiver übernommern und an den Input-Buffer 2000 übergeben. Dieser Input-Buffer 2000 erhält nur einen Input vom vorgelagerten $((m - 1)$-ten) Receiver und arbeitet nach dem First-in-First-out Prinzip (1 Input FIFO). Die beiden Buffer 2000 und 3000 verfügen zum Zeitpunkt $N$ jeweils über eine Buffergröße $D$, der es ermöglicht $D + 1$ Elemente von $\hat{S}_{m-1}$ bzw. $S_m$ zu buffern. Für den Input-Buffer 2000 können jetzt zwei Fälle auftreten:

1. $\hat{S}_{m-1}$ ist gegenüber $S_m$ um $0 \leq \tau_{m-1} < D$ Symbols verzögert, i.e. der Buffer ist zum Zeitpunkt $N$: $\{\hat{s}_{N\text{-}D\text{-}\tau m\text{-}1,m\text{-}1}\,,\,\ldots$ $\hat{s}_{N\text{-}\tau m\text{-}1,m\text{-}1}\}$, oder

2. $\hat{S}_{m-1}$ eilt $S_m$ um $0 \leq l_m < D$ Symbols voraus, i.e. der Buffer ist zum Zeitpunkt $N$: $\{\hat{s}_{N\text{-}D+l_m,m\text{-}1}, \ldots, \hat{s}_{N+l_m,m\text{-}1}\}$.

Der Input-Buffer 2000 übergibt die Daten $\hat{S}_{m-1}$ dann ebenfalls an den Funktionsblock 4000. Die an den nächsten, i.e. den ($m$ + 1)-ten Receiver übertragenen Daten sind dann das Ergebnis einer generischen Funktion $\mathcal{F}$ des Funktionsblocks 4000 nach dem Prinzip

$$\hat{s}_{N,m} = \mathcal{F}(s_{N-\tau_{m-1},m}, \hat{s}_{N-\tau_{m-1},m-1}) - Fall\ 1 \qquad (2)$$

oder

$$\hat{s}_{N,m} = \mathcal{F}(s_{N,m}, \hat{s}_{N,m-1}) - Fall\ 2 \qquad (3)$$

wobei die Gleichung (2) den ersten Fall (Verzögerung von $\hat{S}_{m-1}$ gegenüber $S_m$) beschreibt und die Gleichung (3) den zweiten Fall (Vorauseilen von $\hat{S}_{m-1}$ gegenüber $S_m$). Im Fall der Gleichung (3) fällt daher selbstverständlich die zeitliche Verzögerung um $\tau_{m-1}$ weg. Gleichung (2) bzw. Gleichung (3) entspricht einer Kombination der vom Receiver (RX $m$) über seine Antenne(n) empfangenen Daten $S_m$ mit den neuesten vom vorherigen Receiver (RX ($m$ - 1)) kommenden Daten $\hat{S}_{m-1}$ des fraglichen Audiosamples. Die Funktion $\mathcal{F}$ kann eine einfache Wahl zwischen den beiden Eingangsargumenten auf Basis der Qualitätsmetadaten, eine "maximum ratio combining" (MRC) Funktion von Basisbandsignalen auf Basis der abgeschätzten SNR, oder jede andere geeignete und aus dem Stand der Technik bekannte Funktion sein. Der Input-Buffer 2000 und Output-Buffer 3000 werden in Abhängigkeit von der Anzahl der benötigten Netzpunkte (Receiver) und der festgelegten Obergrenzen für $\tau_p$ und $\tau_i$, die systemimmanente Parameter darstellen, dimensioniert. Um sicherzustellen, dass die strengen Anforderungen an die Latenz erfüllt werden, muss der interne Buffer 3000 des Receivers m laufend überwacht werden, um sein Sample, das ($\tau_m$ + 1)-te, sofort im Funktionsblock 4000 berechnen und an das Output-Interface 5000 weiterleiten zu können. Das geschieht indem die Timing-Informationen des aktuellen Samples mit denen der Buffer verglichen werden, etwa durch einen Indexvergleich. Die ($\tau_m$ + 1)-te Position des internen Buffers 3000 wird damit durch Abgleich der an Input-Buffer 2000 und Output-Buffer 3000 vorhandenen Metadaten für Timing erkannt. Die Metadaten enthalten die relative Position des zugehörigen Samples im Wireless PHY Protocol Frame. Es wird hierfür angenommen, dass die Länge des Referenzframes ausreichend viel größer ist als die Maximalgröße des Buffers $D$, so dass der Receiver das Timing basierend auf den Positionsindizes, die den Beginn eines neuen Frames markieren, korrekt erfassen kann. Es ist realistisch, dass die Framelänge sogar um etwa das Zehnfache größer ist als $\tau_m$. Die Rechenoperationen 1000, 2000, 3000, 4000 und 5000 können mit den in modernen Digitalreceivern enthaltenen Rechenkapazitäten durchgeführt werden.

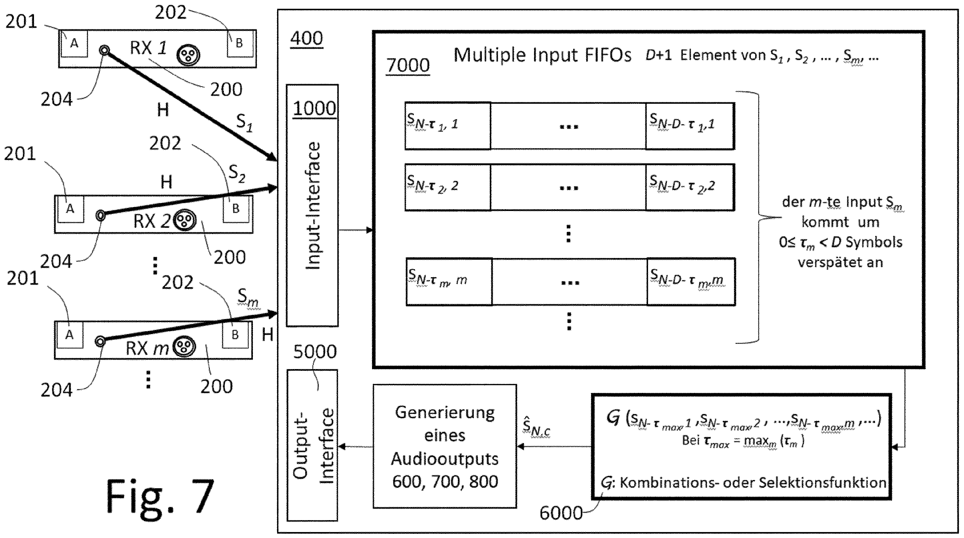

Die Fig. 7 zeigt einen möglichen Ablauf des erfindungsgemäßen Verfahrens für ein Stern-Netzwerk gemäß Fig. 2 und Fig. 5, mit mehreren durch die Kabel H mit einer Zentraleinheit (CU; 400 in Fig. 5) verbundenen Receivern RX 1 bis RX $m$ in Sternanordnung, einem Input-Interface 1000, einem Funktionsblock 6000, einem Input-Buffer 7000, und einem Output-Interface 5000 sowie einem Block zur Generierung eines Audiooutputs entweder aus 600, 700 und 800, oder 700 und 800, oder nur 800 (vgl. Fig. 2). Auch hier wird eine möglichst geringe Latenz angestrebt. Es werden in diesem Verfahrensbeispiel die Daten aller Receiver $S_m$, wobei m={1,...,M} und M die Anzahl der Receiver ist, entsprechend den Datenpaaren 501/502, 601/602, oder 701/702 aus Fig. 5, an die CU 400 übermittelt, dort am Input-Interface 1000 übernommen und an den Input-Buffer 7000 weitergereicht. Dieser ist jedoch für mehrere Eingänge ausgelegt (mehrere FIFOs). Der Input-Buffer 7000 buffert nun analog zu Fig. 6 bis zu $D$ + 1 -Elemente, wobei der Dateninput $S_m$ um $0 \leq \tau_m < D$ Symbols verzögert bei 7000 einlangt, und reicht die Daten an den Funktionsblock 6000 weiter. Im Funktionsblock 6000 werden die Signale nun durch die generische Funktion $\mathcal{G}$ (Gleichung (4)) kombiniert oder selektiert

$$\hat{s}_{N,c} = \mathcal{G}(s_{N-\tau_{max},1}, \ldots, s_{N-\tau_{max},m}, \ldots s_{N-\tau_{max},M}) \qquad (4)$$

wobei $\tau_{max} = max_m(\tau_m)$ gilt, da immer die größte Latenz zum Tragen kommt. Das verarbeitete Signal $\hat{S}_c$, mit $\hat{s}_{N,c}$ als Sampel von $\hat{S}_c$ zum Zeitpunkt $N$, entsprechend den Datenpaaren 501*/502*, 601*/602*, oder 701*/702* aus Fig. 5, wird anschließend an den Block zur Generierung eines Audiooutputs 600, 700 oder 800 weitergereicht und anschließend am Output-Interface 5000 zur Verfügung gestellt.

Selbst in einem der einfachsten anzunehmen Fälle eines Receivernetzwerks, dem bereits bei Fig. 1 beschriebenem Fall eines Daisy-Chain Netzwerks, bei dem das komprimierte Audiosignal 602 verarbeitet werden soll, ergeben sich durch die Erfindung bedeutende Vorteile gegenüber dem Stand der Technik. Das zeigt sich durch folgende Überlegung:

Bei Funkkanälen mit unabhängigen, gleich verteilten (independent identically distributed, i.i.d.) Fadingprozessen gegenüber identen Antennen 301, 302 und identen zugehörigen Receivern 200 sinkt die Wahrscheinlichkeit eines fehlerhaften Samples am Eingang des Audiodecoders auf $p^m$ am $m$-ten Knoten der Daisy-Chain, wobei $0 \le p \le 1$ die Fehlerwahrscheinlichkeit des FEC-Kanaldecoders 600, bei einer festgelegten durchschnittlichen Funkempfangsstärke des Signals während des Betriebs, ist. In besonders ungünstigen Fällen, in denen $p$ = 10% wird (was etwa an der Grenze des Bandes, oder bei starken Interferenzen geschehen kann), würde das Audiosignal bei Verfahren nach dem Stand der Technik stumm geschalten werden. Bei einem System, das mit dem erfindungsgemäßen Verfahren betrieben wird, kann hingegen durch das Einbinden von fünf weiteren (redundanten) Receivern und deren zugehörigen Antennen eine hochgradig zuverlässige Systemperformance sichergestellt werden. Die Wahrscheinlichkeit $p$ eines fehlerhaften Samples am Eingang des Audiodecoders p sinkt in diesem Fall bei Verwendung des erfindungsgemäßen Verfahrens beispielsweise auf $p^{1+5}$ = 0,0001%. In realistischen Szenarios kann die Wahrscheinlichkeit eines fehlerhaften Samples am Eingang des Audiodecoders nicht unter derart vereinfachten Rahmenbedingungen betrachtet werden, da das Fading der Funkkanäle keiner i.i.d. über die verteilten Verbindungen unterliegt, da etwa die Streckenverluste, Abschattungsphänomene und Interferenzen zwischen den räumlich getrennten Strecken sehr unterschiedlich sind. Als Beispiel für die praktische Unanwendbarkeit des i.i.d.-Modells genügt es sich zwei Receiver mit je einer Antenne vorzustellen, die durch ihre unterschiedliche Position auch andere räumliche Bereiche abdecken, wodurch sich auch eine größere räumliche Gesamtabdeckung für Übertragungen ergibt. Die i.i.d. Fadingsprozess-Annahme zwischen den Antennen unterschiedlicher Receiver liefert ein gutes Modell für die Realität wenn die Distanzen zwischen den Antennen in der Größenordnung der Wellenlänge der Übertragungsträgerfrequenz liegt. Je größer die Distanz der Antennen der einzelne Receiver nun ist, desto schlechter gilt das i.i.d. Modell.

Wenn die Distanz zwischen den Antennen zu groß wird, dann wirkt die Redundanz der Antennen nicht nur gegen das Fading sondern kann auch zur Erweiterung der Übertragungsabdeckung dienen. Es lässt sich daher die soeben beschriebene Verbesserung bei der Wahrscheinlichkeit eines fehlerhaften Samples bis zu einem gewissen Grad zu Gunsten einer größeren räumlichen Abdeckung pro Receiver verschieben. Die Möglichkeit einer Vergrößerung der räumlichen Abdeckung je Audio Übertragung ist von kritischer Wichtigkeit bei bestimmten Anwendungen wie etwa Filmproduktionen. Diese Überlegung lässt sich in der Theorie so weit spielen, dass bei gegenüber dem Stand der Technik gleichbleibender Wahrscheinlichkeit eines fehlerhaften Samples eine erheblich vergrößerte räumliche Abdeckung erreicht werden kann.

Ein weiterer wichtiger Vorteil bei einem Ablauf des Verfahrens in Daisy Chain Topologie lieg darin, dass die Gesamtdistanz, die überwunden werden kann durch die Daisy Chain im Vergleich zur Sterntopologie größer ist. Das liegt an den Leitungsverlusten der Kabel H. Zur besseren Vorstellbarkeit seien zehn Receiver 200 gegeben, die je mit einem Kabel H mit einer Länge von 30 m mit der nächsten Einheit verbunden sind. Im Fall der Daisy Chain Topologie ergibt sich damit eine Kette in einer Länge von 300m, während sich bei der Sterntopologie alle Receiver 200 in einem Radius von 30m rund um die Zentraleinheit 400 gruppieren. Die Daisy Chain ist damit tendenziell flexibler in ihrer Anwendbarkeit.

Der Begriff "Schnittstelle" bzw. "Empfangsschnittstelle" beschreibt im Zusammenhang mit den Schnittstellen, X, Y und Z keine physische Schnittstelle, sondern den Punkt unmittelbar vor Durchführung des jeweils nachfolgenden Elements in den dargestellten Wirkungs- und Signalflussplänen der Figs. 3 bis 7. Es handelt sich daher nur um eine gedachte Schnittstelle an der die Eingangsgrößen 501, 502, 601, 602, 701 bzw. 702 in den jeweiligen Funktionsblock münden.

**Patentansprüche**

1. Verfahren zur Signalverarbeitung von Audio-Receivern (200), und das die Schritte

    a) Senden von Daten eines Mikrofons (100) über Funk an $n \ge 1$ Antennen (301, 302) der Receiver (200),
    b) Weiterleitung des empfangenen Signals von den Antennen (301, 302) an die Eingangsports (201, 202) der Receiver (200),
    c) Basisbandmodulation der empfangenen Signale zu Basisbanddaten (502) und Abschätzung von Metadaten zur Signalqualität und Signalzuverlässigkeit (501) in einem Verarbeitungsschritt (500) innerhalb der Receiver (200),

d) Weitergabe der Basisbanddaten (502) gemeinsam mit den Metadaten zu Timing und Signalqualität (501) an einen Block zur FEC Kanaldekodierung (600) mit einer Schnittstelle (X),

e) Dekodierung der Signaldaten im Dekodierungsblock (600) durch eine Vorwärtsfehlerkorrektur,

f) Weitergabe von komprimierten Audiosamples (602) und Metadaten (601) zur Zuverlässigkeit und zeitlichen Position der Audiodaten im Frame des Wireless Physical Layer (PHY) Protocols vom Dekodierungsblock (600) an einen Audiodekoderblock (700) mit einer Schnittstell Y,

g) Dekompression der Audiodaten im Audiodekoderblock (700),

h) Weiterleitung von Audiodaten (702) und Metadaten zur Zuverlässigkeit und zeitlichen Position der Audiodaten (601) an einen Endverarbeitungsblock (800) mit einer Schnittstelle (Z),

i) Extraktion der Datenpaare (501) und (502) an der Schnittstelle (X), oder (601) und (602) an der Schnittstelle (Y), oder (701) und (702) an der Schnittstelle (Z) aus dem Verarbeitungsfluss

umfasst, **dadurch gekennzeichnet, dass**

j) die extrahierten Datenpaare (501)/(502), oder (601)/(602), oder (701)/(702) an einen Funktionsblock (4000, 6000) weitergeleitet werden,

k) diese mittels einer Funktion $(\mathcal{F}, \mathcal{G})$ mit den im Funktionsblock (4000, 6000) auf der Schnittstelle vorliegenden Daten (502\*, 602\*, 702\* und/oder 502, 602, 702) anderer Receiver (200) auf Basis ihrer Metadaten (501\*, 601\*, 701\* und/oder 501, 601, 701) kombiniert oder selektiert und damit zu den Datensätzen $\hat{S}_m$ oder $\hat{S}_c$ (d.h. (502\*)/(501\*), (602\*)/(601\*) oder (702\*)/(701\*)) verarbeitet werden,

l) die verarbeiteten Datensätze $\hat{S}_m$, oder $\hat{S}_c$ an den nächsten Verarbeitungsblock (600, 700 oder 800) zum lokalen Aufbau des Audioausgangssignals weitergeleitet werden,

m) die verarbeiteten Datensätze $\hat{S}_m$, oder $\hat{S}_c$ weiters an ein Output-Interface 5000 weitergeleitet werden

n) und die verarbeiteten Datensätze $\hat{S}_m$ oder $\hat{S}_c$ an einer dem Output-Interface 5000 nachgelagerten Output-Schnittstelle (203) zur Verfügung stehen.

2. Verfahren nach Anspruch 1, **dadurch gekennzeichnet, dass** zur Funksignalübertragung eines der Multiplexverfahren FDMA, CDMA, TDMA oder OFDMA verwendet wird.

3. Verfahren nach Anspruch 1 oder 2, **dadurch gekennzeichnet, dass** die Receiver (200) in Daisy-Chain-Topologie angeordnet sind.

4. Verfahren nach Anspruch 2, **dadurch gekennzeichnet, dass** die mittels Funktion ($\mathcal{F}$) verarbeiteten Datensätze (502\*/501\*), (602\*/601\*) oder (702\*/701\*) zusätzlich zum nächsten receiverinternen Verarbeitungsblock (600, 700 oder 800) an den nächsten Receiver der Daisy-Chain weitergeleitet werden.

5. Verfahren nach einem der Ansprüche 3 oder 4, **dadurch gekennzeichnet, dass** die Reihenfolge der Receiver (200) in der Daisy-Chain physisch durch Verkabelung eines digitalen Outputs (204) eines ersten Receivers (200) mit einem digitalen Input (205) des nächsten Receivers festgelegt wird.

6. Verfahren nach einem der Ansprüche 3 oder 4, **dadurch gekennzeichnet, dass** die Receiver (200) statt über einen digitalen Output (204) und einen getrennten digitalen Input (205), über einen digitalen Netzwerkanschluss mit Input/Output verfügen und die Reihenfolge der Receiver (200) in der Daisy-Chain mittels Softwarekonfiguration festgelegt wird.

7. Verfahren nach einem der Ansprüche 3 bis 6, **dadurch gekennzeichnet, dass** an jeden Receiver (200) ein Audio-Output-Kabel (G) angeschlossen ist.

8. Verfahren nach einem der Ansprüche 23 bis 67, **dadurch gekennzeichnet, dass** die Daten $\hat{S}_{m-1}$ des (m-1)-ten Receivers (200) an den m-ten Receiver übertragen werden und dort in einem Input-Buffer (2000) gebuffert werden.

9. Verfahren nach einem der Ansprüche 23 bis 68, **dadurch gekennzeichnet, dass** die Receiver (200) über einen internen Buffer (3000) zur Zwischenspeicherung der Datensätze $S_m$ verfügen.

10. Verfahren nach Anspruch 1 oder 2, **dadurch gekennzeichnet, dass** die Receiver (200) in Stern-Topologie angeordnet sind.

**11.** Verfahren nach Anspruch 10, **dadurch gekennzeichnet, dass** die Verarbeitung der Datensätze (502*/501*), (602*/601*) oder (702*/701*) mittels Funktion ($\mathcal{G}$) in einer Zentraleinheit (400) geschieht.

**12.** Verfahren nach Anspruch 10 oder 11, **dadurch gekennzeichnet, dass** die Zentraleinheit (400) Teil eines Mischpultes ist.

**13.** Verfahren nach einem der Ansprüche 10,11 oder 12, **dadurch gekennzeichnet, dass** ein Audio-over-Ethernet-Protokoll verwendet wird.

**Geänderte Patentansprüche gemäss Regel 137(2) EPÜ.**

**1.** Verfahren zur Signalverarbeitung von Audio-Receivern (200), wobei die Audio-Receivern (200) Kabel (H) zur Signalweiterleitung nutzen, das die Schritte

a) Senden von Daten eines Mikrofons (100) über Funk an $n \geq 1$ Antennen (301, 302) der Receiver (200),
b) Weiterleitung des empfangenen Signals von den Antennen (301, 302) an die Eingangsports (201, 202) der Receiver (200),
c) Demodulation der empfangenen Signale zu Basisbanddaten (502) und Abschätzung von Metadaten zur Zuverlässigkeit und zeitlichen Position (501) in einem Verarbeitungsschritt (500) innerhalb der Receiver (200),
d) Weitergabe der Basisbanddaten (502) gemeinsam mit den Metadaten zur Zuverlässigkeit und zeitlichen Position (501) an einen Block zur FEC Kanaldekodierung (600) mit einer Schnittstelle (X),
e) Fehlererkennung und Dekodierung der Signaldaten im Dekodierungsblock (600) durch eine Vorwärtsfehlerkorrektur,
f) Weitergabe von komprimierten Audiosamples (602) und Metadaten (601) zur Zuverlässigkeit und zeitlichen Position der Audiodaten im Frame des Wireless Physical Layer (PHY) Protocols vom Dekodierungsblock (600) an einen Audiodekoderblock (700) mit einer Schnittstelle Y,
g) Dekompression der komprimierten Audiosamples (602) im Audiodekoderblock (700),
h) Weiterleitung von Audiodaten (702) und Metadaten zur Zuverlässigkeit und zeitlichen Position der Audiodaten (701) an einen Endverarbeitungsblock (800) mit einer Schnittstelle (Z),
i) Extraktion aus der Datenverarbeitungs-Kette:

eines Datenpaares (501)/(502) der Metadaten zur Zuverlässigkeit und zeitlichen Position (501) und der Basisbanddaten (502) an der Schnittstelle (X), oder
eines Datenpaares (601)/(602) der Metadaten zur Zuverlässigkeit und zeitlichen Position der Audiodaten (601) der komprimierten Audiosamples und (602) an der Schnittstelle (Y), oder
eines Datenpaares (701)/(702) der Metadaten zur Zuverlässigkeit und zeitlichen Position der Audiodaten (701) und der Audiodaten (702) an der Schnittstelle (Z)
aus dem Verarbeitungsfluss
umfasst, **dadurch gekennzeichnet, dass**

j) die extrahierten Datenpaare (501)/(502), oder (601)/(602), oder (701)/(702) an einen Funktionsblock (4000, 6000) weitergeleitet werden,
k) die extrahierten Datenpaare (501)/(502), (601)/(602), oder (701)/(702) entweder zusammen mit Daten (502*), (602*), oder (702*) eines anderen im Funktionsblock (4000) verfügbaren Receivers (200) über eine Kombinier- oder Auswahlfunktion ($\mathcal{F}$) auf Grundlage ihrer Metadaten (501*), (601*), oder (701*) zur Bildung von Datensätzen $\hat{S}_m$ (d.h. (502*)/(501*), (602*)/(601*) oder (702*)/(701*)) verarbeitet werden, oder zusammen mit Daten (502), (602), oder (702) anderer im Funktionsblock (6000) verfügbarer Receiver (200) über eine Kombinier- oder Auswahlfunktion ($\mathcal{G}$), auf Grundlage ihrer Metadaten (501), (601), oder (701) zur Bildung von Datensätzen $\hat{S}_c$ (d.h. (502*)/(501*), (602*)/(601*) oder (702*)/(701*)) verarbeitet werden,
l) die verarbeiteten Datensätze $\hat{S}_m$, bzw. $\hat{S}_c$ an den nächsten Verarbeitungsblock (600, 700 oder 800) zum lokalen Aufbau des Audioausgangssignals weitergeleitet werden,
m) die verarbeiteten Datensätze $\hat{S}_m$, bzw. $\hat{S}_c$ weiters an ein Output-Interface (5000) bzw. (5001) weitergeleitet werden
n) und die verarbeiteten Datensätze $\hat{S}_m$ bzw. $\hat{S}_c$ an einer dem Output-Interface (5000) bzw. (5001) nachgelagerten Output-Schnittstelle (204) bzw. (203) zur Verfügung stehen.

2.  Verfahren nach Anspruch 1, **dadurch gekennzeichnet, dass** zur Funksignalübertragung eines der Multiplexverfahren FDMA, CDMA, TDMA oder OFDMA verwendet wird.

3.  Verfahren nach Anspruch 1 oder 2, **dadurch gekennzeichnet, dass** die Receiver (200) in Daisy-Chain-Topologie angeordnet sind.

4.  Verfahren nach Anspruch 3, **dadurch gekennzeichnet, dass** die mittels Funktion ($\mathcal{F}$) verarbeiteten Datensätze (502*/501*), (602*/601*) oder (702*/701*) zusätzlich zum nächsten receiverinternen Verarbeitungsblock (600, 700 oder 800) an den nächsten Receiver der Daisy-Chain weitergeleitet werden.

5.  Verfahren nach einem der Ansprüche 3 oder 4, **dadurch gekennzeichnet, dass** die Reihenfolge der Receiver (200) in der Daisy-Chain physisch durch Verkabelung eines digitalen Outputs (204) eines ersten Receivers (200) mit einem digitalen Input (205) des nächsten Receivers festgelegt wird.

6.  Verfahren nach einem der Ansprüche 3 oder 4, **dadurch gekennzeichnet, dass** die Receiver (200) statt über einen digitalen Output (204) und einen getrennten digitalen Input (205), über zwei digitale Netzwerkanschlüsse mit Input/Output verfügen und die Reihenfolge der Receiver (200) in der Daisy-Chain mittels Softwarekonfiguration festgelegt wird.

7.  Verfahren nach einem der Ansprüche 3 bis 6, **dadurch gekennzeichnet, dass** an jeden Receiver (200) ein Audio-Output-Kabel (G) angeschlossen ist.

8.  Verfahren nach einem der Ansprüche 23 bis 67, **dadurch gekennzeichnet, dass** die Daten $\hat{S}_{m-1}$ des (m-1)-ten Receivers (200) an den m-ten Receiver übertragen werden und dort in einem Input-Buffer (2000) gebuffert werden.

9.  Verfahren nach einem der Ansprüche 23 bis 68, **dadurch gekennzeichnet, dass** die Receiver (200) über einen internen Buffer (3000) zur Zwischenspeicherung der Datensätze $S_m$ verfügen.

10. Verfahren nach Anspruch 1 oder 2, **dadurch gekennzeichnet, dass** die Receiver (200) in Stern-Topologie angeordnet sind.

11. Verfahren nach Anspruch 11, **dadurch gekennzeichnet, dass** die Verarbeitung der Datensätze (502*/501*), (602*/601*) oder (702*/701*) mittels Funktion ($\mathcal{G}$) in einer Zentraleinheit (400) geschieht.

12. Verfahren nach Anspruch 10 oder 11, **dadurch gekennzeichnet, dass** die Zentraleinheit (400) Teil eines Mischpultes ist.

13. Verfahren nach einem der Ansprüche 10, 11 oder 12, **dadurch gekennzeichnet, dass** ein Audio-over-Ethernet-Protokoll verwendet wird.

Fig. 1

EP 4 210 349 A1

Fig. 2

EP 4 210 349 A1

Fig. 3

# Fig. 4

EP 4 210 349 A1

RX *m*     200

$\hat{S}_m$

500, 600 oder 700

501, 601, oder 701
502, 602, oder 702

$S_m$

$\mathcal{F}$ : Kombinations- oder Selektionsfunktion 4000

501*, 601*, oder 701*
502*, 602*, oder 702*

600, 700 oder 800

RX *m-1* 200

501*, 601*, oder 701*
502*, 602*, oder 702*

RX *m+1* 200

400

600, 700 oder 800

501*, 601*, oder 701*

502*, 602*, oder 702*

$\hat{\underline{s}}_c$

$\mathcal{G}$ : Kombinations- oder Selektionsfunktion
6000

501, 601, oder 701

502, 602, oder 702

501, 601, oder 701

502, 602, oder 702

501, 601, oder 701

502, 602, oder 702

$\underline{S}_m$

RX 1    200

RX 2    200

RX m    200

...

...

# Fig. 5

Fig. 6

Fig. 7

Europäisches Patentamt
European Patent Office
Office européen des brevets

**EUROPÄISCHER RECHERCHENBERICHT**

**Nummer der Anmeldung**

**EP 22 15 0703**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2019/166423 A1 (ANDERSON MATT [US]) 30. Mai 2019 (2019-05-30) * das ganze Dokument * ----- | 1-13 | INV. H04R3/00 H04B7/08 G06F3/16 |
| A | NABEEL MUHAMMAD ET AL: "Efficient Data Gathering for Decentralized Diversity Combining in Heterogeneous Sensor Networks", 2019 IEEE WIRELESS COMMUNICATIONS AND NETWORKING CONFERENCE (WCNC), IEEE, 15. April 2019 (2019-04-15), Seiten 1-6, XP033652062, DOI: 10.1109/WCNC.2019.8885669 [gefunden am 2019-10-28] * Zusammenfassung; Abbildung 1 * ----- | 4 | H04W4/06 ADD. H04R27/00 |
| A | WO 2017/040904 A1 (SHURE ACQUISITION HOLDINGS INC [US]) 9. März 2017 (2017-03-09) * das ganze Dokument * ----- | 1-13 | |
| A | LIU HONG ET AL: "Overview of Wireless Microphones-Part I: System and Technologies", IEEE TRANSACTIONS ON BROADCASTING, IEEE SERVICE CENTER, PISCATAWAY, NJ, US, Bd. 61, Nr. 3, 1. September 2015 (2015-09-01), Seiten 494-504, XP011667983, ISSN: 0018-9316, DOI: 10.1109/TBC.2015.2459661 [gefunden am 2015-09-02] * das ganze Dokument * ----- | 1-13 | RECHERCHIERTE SACHGEBIETE (IPC) H04R H04B G06F H04W |

Der vorliegende Recherchenbericht wurde für alle Patentansprüche erstellt

| Recherchenort | Abschlußdatum der Recherche | Prüfer |
|---|---|---|
| Den Haag | 23. Juni 2022 | Streckfuss, Martin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

......................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 22 15 0703

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-06-2022

| Im Recherchenbericht angeführtes Patentdokument | Datum der Veröffentlichung | Mitglied(er) der Patentfamilie | Datum der Veröffentlichung |
|---|---|---|---|
| US 2019166423 A1 | 30-05-2019 | KEINE | |
| WO 2017040904 A1 | 09-03-2017 | AU 2016318031 A1 | 29-03-2018 |
| | | CA 2997256 A1 | 09-03-2017 |
| | | CN 108028694 A | 11-05-2018 |
| | | EP 3345313 A1 | 11-07-2018 |
| | | HK 1251092 A1 | 18-01-2019 |
| | | JP 7021072 B2 | 16-02-2022 |
| | | JP 2018530220 A | 11-10-2018 |
| | | KR 20180048911 A | 10-05-2018 |
| | | TW 201711404 A | 16-03-2017 |
| | | US 2017070250 A1 | 09-03-2017 |
| | | US 2017264324 A1 | 14-09-2017 |
| | | US 2018102802 A1 | 12-04-2018 |
| | | US 2018375540 A1 | 27-12-2018 |
| | | US 2019372612 A1 | 05-12-2019 |
| | | WO 2017040904 A1 | 09-03-2017 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 10470180 B2
- US 8670380 B2

**In der Beschreibung aufgeführte Nicht-Patentliteratur**

- *Quad-Diversity,* 05. Oktober 2021, https://pubs.shure.com/guide/AD4Q/en-US.pdf
- **A. WYNER.** Shannon-theoretic approach to a Gaussian cellular multiple access channel,. *IEEE Trans. Inf. Theory,* November 1994, vol. 40 (6), 1713-1727
- **S. V. HANLY ; P. WHITING.** Information-theoretic capacity of multireceiver networks,. *Telecommun. Syst. - Modeling, Analysis, Design and Management,* 1993, vol. 1 (1), 1-42
- **O. SOMEKH ; S. SHAMAI (SHITZ).** Shannon-theoretic approach to a Gaussian cellular multiple-access channel with fading. *IEEE Trans. Inf. Theory,* Juli 2000, vol. 46 (4), 2000
- **D. GESBERT ; S. HANLY ; H. HUANG ; S. SHAMAI (SHITZ) ; O. SIMEONE ; W. YU.** Multi-Cell MIMO Cooperative Networks: A New Look at Interference,. *IEEE Journal on Selected Areas in Communications,* Dezember 2010, vol. 28 (9
- **H. ZHU ; G. B. GIANNAKIS ; A. CANO.** Distributed In-Network Channel Decoding,. *IEEE Trans. on Signal Processing,* Oktober 2009, vol. 57 (10
- **P. ISOMÄKI ; J. ISOAHO.** On Diversity Combining. *TUCS Technical Report,* April 2008